Europäisches Patentamt

European Patent Office

Office européen des brevets

(19)

(11) Veröffentlichungsnummer : **0 072 511**
**B1**

(12) **EUROPÄISCHE PATENTSCHRIFT**

(45) Veröffentlichungstag der Patentschrift : 03.12.86

(21) Anmeldenummer : 82107122.2

(22) Anmeldetag : 06.08.82

(51) Int. Cl.⁴ : **G 01 S 5/16, G 01 V 9/04**

(54) **Anordnung zur Bestimmung der Lage des Durchstosspunktes eines entlang einer Bahn bewegten Objekts durch eine diese Bahn kreuzende Messebene.**

(30) Priorität : 14.08.81 DE 3132168

(43) Veröffentlichungstag der Anmeldung : 23.02.83 Patentblatt 83/08

(45) Bekanntmachung des Hinweises auf die Patenterteilung : 03.12.86 Patentblatt 86/49

(84) Benannte Vertragsstaaten : AT BE CH FR GB IT LI NL SE

(56) Entgegenhaltungen :
DE-A- 2 402 204
DE-C-  977 816
FR-A- 2 417 222
GB-A- 2 065 408
US-A- 3 727 069
US-A- 3 852 714
US-A- 4 136 568
US-A- 4 272 189

(73) Patentinhaber : Ficht GmbH
Spannleitenberg 1
D-8011 Kirchseeon (DE)

(72) Erfinder : Peter, Klaus Jürgen
Göttnerstrasse 31
D-8254 Isen (DE)

(74) Vertreter : Spott, Gottfried, Dr. et al
Patentanwälte Spott und Puschmann Sendlinger-Tor-Platz 11
D-8000 München 2 (DE)

EP 0 072 511 B1

Jouve, 18, rue St-Denis, 75001 Paris, France

## Beschreibung

Die Erfindung betrifft eine Anordnung gemäß den Merkmalen des Oberbegriffs des Anspruches 1.

Aus der DE-A-24 02 204 ist eine Einrichtung zur Bestimmung der Lage des Durchstoßpunktes eines sich längs einer Flugbahn bewegenden Objektes in einer vorgegebenen Meßebene kannt. Die Meßebene ist durch zwei gegeneinander geneigte, in einem bekannten Abstand zueinander aufgestellte Kameras bestimmt. Die Kameras weisen in ihren Bildebenen Fotodetektoren auf. Die Signale der einzelnen Fotodetektoren werden in einer dort nicht näher beschriebenen Auswerteschaltung verarbeitet und dann einem Rechner zur Bestimmung der Lage des Durchganges des Geschosses durch die Meßebene zugeführt. Die Erfassung z. B. einer durch ein Geschoß bewirkten Abschattung auf einem oder mehreren benachbarten Fotodetektoren, z. B. einer Fotodetektoren-Zeile — die Beleuchtung der Meßebene wird unterstellt — ist bei sich ändernder Beleuchtung schwierig.

Aus der FR-A-2 417 222 ist eine Auswerteschaltung mit einer Reihe von n in schnellem Rhythmus nacheinander abgetasteten Fotodetektoren bekannt, die räumlich begrenzte Veränderungen in einem zugeordneten Raum überwachen. Hierzu werden über einen Analog-Digital-Wandler die abgetasteten n Fotodetektor-Signale in Digitalsignale umgewandelt, ehe sie über eine Verzögerungseinrichtung zwecks Verzögerung der abgeleiteten Digitalsignale um einen oder mehrere Abtastzyklen einer Vergleichseinrichtung zugeführt werden, in der die von gleichen Fotodetektoren im Abstand eines Abtastzyklus oder einem Mehrfachen davon abgeleiteten Ausgangssignale verglichen und jeweils abhängig vom Unterschied ein Signal abgegeben wird.

Im Zusammenhang mit solchen Auswerteschaltungen ist es aus der US-A-3 852 714 ferner bekannt, zeilen- und spaltenweise angeordnete Fotodetektor-Elemente eines zweidimensionalen Mosaik-Fotosensors parallel auszuwerten und zu diesem Zwecke Gruppen von Detektorelementen zu Teilauswerteschaltungen mit jeweils zugeordneten Analog-Digital-Wandlern zusammenzufassen.

Die Erfindung stellt sich die Aufgabe, die Anordnung nach dem Oberbegriff des Anspruchs 1 derart weiterzubilden, daß auch schnelle Objekte kleiner Abmessungen beim Durchstoß durch die Meßebene selbst bei wechselnden äußeren Umgebungsbedingungen sicher zu erfassen sind.

Diese Aufgabe wird durch die im Anspruch 1 angegebenen Merkmale gelöst.

Eine weitere Verbesserung der Signalauswertung wird gemäß einer Weiterbildung der Erfindung dadurch erreicht, daß man die Folge der an den Detektoren abgetasteten analogen Signale einem Spitzenwertgeber zuführt und daß man das Ausgangssignal dieses Spitzenwertgebers als Vergleichsgröße benutzt, mit dem man die Signale der Detektoren in Beziehung setzt (Normierung). Dieses Inbezugsetzen kann direkt im Analog-Digitalwandler gescheben.

Da die Detektorzeilen, z. B. sogenannte Diodenarrays, eine große Zahl von Einzeldetektoren aufweisen, werden mehrere, z. B. 4 Teilauswerteschaltungen parallel vorgesehen und es werden mit deren Eingängen die einzelnen Detektoren von Gruppen-Detektoren verbunden. Bei Verwendung von 4 Teilauswerteschaltungen wird z. B. mit der einen Teilauswerteschaltung der 1., 5., 9. usw. Detektor der Zeile, mit einer anderen 2., 6., 10. usw. Detektor der Zeile usw. nacheinander verbunden. Dadurch kann man entweder die Abtastfrequenz erniedrigen oder die Häufigkeit der Abtastung vergrößern. Die Abtastfrequenz kann bei einigen MHz liegen. Es ist jedoch auch möglich, z. B. die ersten 256 Detektoren der ersten Teilauswerteschaltung zuzuordnen, der zweiten die folgenden 256 usw.

Verwendet man a Teilauswerteschaltungen, so muß man deren jeweils gleichzeitig erscheinenden a Signale in nacheinander kommende Signale umwandeln. Hierzu werden an (a-1) Teilauswerteschaltungen Kurzzeitspeicher mit unterschiedlicher Speicherzeit vorgesehen, um innerhalb der zur Verfügung stehenden Taktzeit die Signale aneinander zu reihen. Es entsteht dabei eine Signalfolge, deren Aussehen von den Teilsignalen (0 oder 1) abhängt.

Zur weiteren Auswertung der so gewonnenen n Signale werden diese vorzugsweise einem Speicher mit n Speicherplätzen zugeführt. Außerdem ist ein Zähler vorgesehen, der von 1 bis zur höchsten Zahl n der Speicherschaltung bzw. Detektorenzeile zählt. Tritt in der Meßebene eine Lichtänderung, z. B. eine Abschattung durch z. B. ein Geschoß auf, so erfahren einige nebeneinander liegende Detektoren eine Änderung der auftreffenden Lichtintensität. Hierdurch werden deren Signale verändert und die Auswerteschaltung — wie bisher beschrieben — erzeugt an den diesen Detektoren zugeordneten Plätzen gegenüber den den anderen Detektoren zugeordneten Plätzen unterschiedliche Signale (z. B. je eine 1). Die oben angegebene Speicherschaltung in Verbindung mit dem Zähler hält nun fest, bei welcher Zählstellung des Zählers diese Signaländerung auftritt und bei welcher sie wieder verschwindet. Es wird also z. B. festgestellt, daß bei der Zählstellung b (von n möglichen Zählstellungen) die Signaländerung auftritt und z. B. bei (b + 10) wieder verschwindet. Damit liegt fest, daß die Detektoren b bis b + 10 der Zeile z. B. eine Abschattung festgestellt haben.

Anhand der Zeichnung soll ein Ausführungsbeispiel der Erfindung näher erläutert werden. Es zeigen

Figur 1 ein Blockschaltbild einer erfindungsgemäß ausgebildeten Einrichtung zur Bestimmung der Koordinaten des Durchstoßpunktes durch eine durch zwei Kameras überwachte Meßebene,

Figur 2 ein Ausführungsbeispiel für die in Fig. 1 enthaltende Auswerteschaltung,

Figur 3 ein Ausführungsbeispiel für andere Blöcke der Fig. 1.

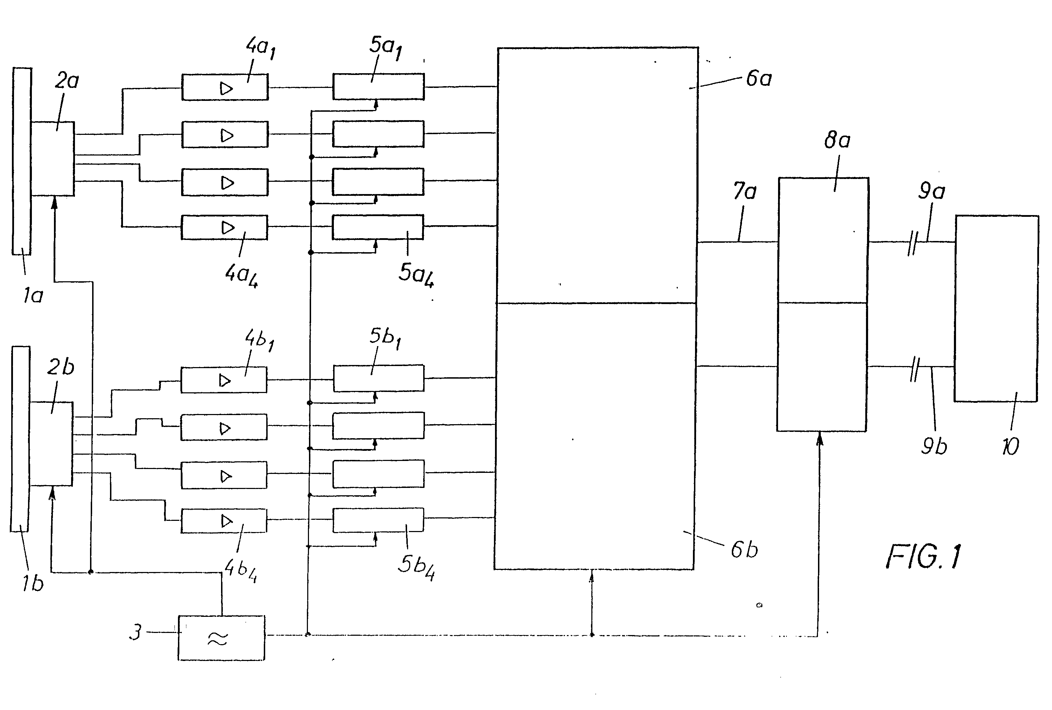

In Fig. 1 sind mit 1a und 1b zwei den beiden hier nicht dargestellten Kameras zugeordnete Fotodiodenzeilen, z. B. sog. Dioden-arrays mit z. B. je 1024 Einzeldioden bezeichnet. Hieran sind Abtastschaltungen 2a und b angeschaltet, mit denen die Einzeldioden nacheinander abgetastet werden. Um die Abtastfrequenz, die aus der Frequenz eines Generators 3 (z. B. 16 MHz) abgeleitet wird, zu erniedrigen, werden hier von den Abtastschaltungen 2a und b gleichzeitig je vier nebeneinanderliegende Dioden abgetastet und getrennt Verstärkern $4a_1$ bis $4a_4$ bzw. $4b_1$ bis $4b_4$ zugeleitet. Mit dem Verstärker $4a_1$ werden in aufeinanderfolgenden Takten z. B. die Dioden 1, 5, 9 ... 1021 mit dem Verstärker $4a_2$ die Dioden 2, 6, 10 ... 1022 usw. verbunden. Die Abtastfrequenz braucht dann nur den vierten Teil betragen (z. B. 4 MHz).

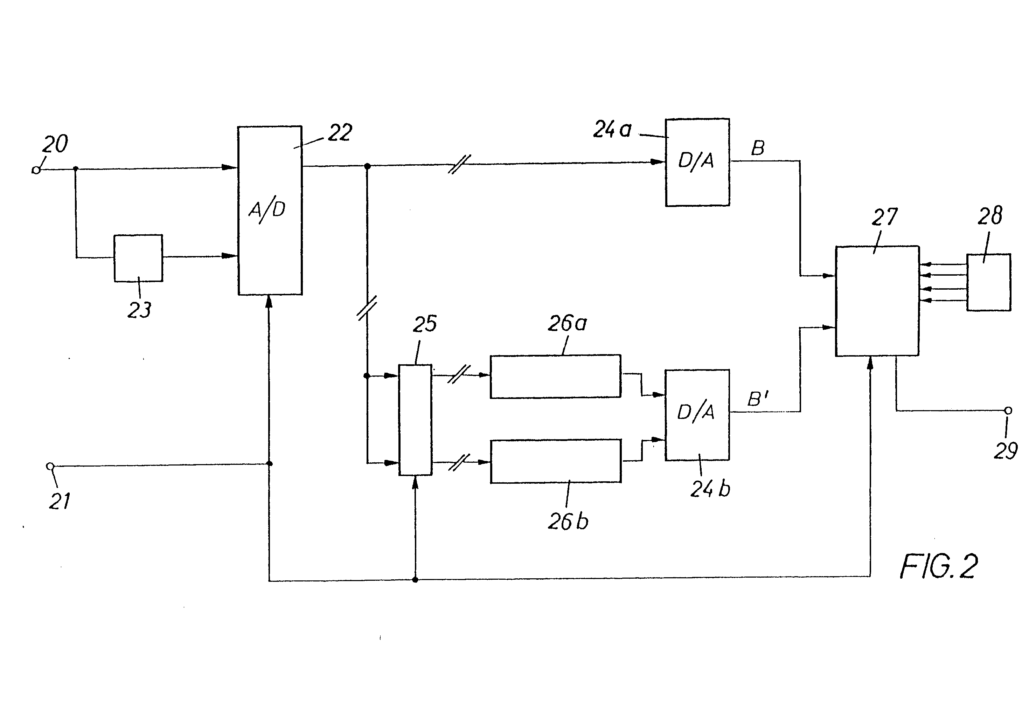

An die Verstärker 4 schließen sich Teilauswerteschaltungen $5a_1$ bis $5a_4$ bzw. $5b_1$-$5b_4$ an. Deren möglicher Aufbau wird nachfolgend anhand der Fig. 2 beschrieben.

Fig. 2 zeigt lediglich eine der Auswerteschaltungen 5 detailliert. An einer Klemme 20 ist z. B. der Verstärker $4a_1$ angeschaltet, an der Klemme 21 der Generator 3. An der Klemme 20 werden somit nacheinander die Analogsignale A der abgetasteten Dioden zugeführt. Die einzelnen Dioden selbst erzeugen bei gleicher Beeinflussung durch Licht bereits unterschiedliche Signalamplituden. Änderungen der Beleuchtung und Alterungserscheinungen der Dioden ändern das Ausgangssignal ebenfalls. Trotzdem soll eine z. B. durch eine Abschattung hervorgerufene Intensitätsänderung an der einzelnen Diode als solche erkannt und ausgewertet werden können. Hierzu dient die Schaltung der Fig. 2.

Die Analogsignale A an der Klemme 20 werden dort einem Analog-Digitalwandler 22 zugeführt. Dieser Baustein 22 beinhaltet gleichzeitig einen Quotientenbildner. Dem Wandlerbaustein 22 wird hierzu zusätzlich das Signal eines Spitzenwertgebers 23 zugeführt, der ein dem Spitzenwert der aufeinanderfolgenden Analogsignale entsprechendes Signal A' dem Baustein 22 zuführt. Dort wird um Helligkeitsänderungen zu unterdrücken der Quotient A/A' gebildet und dann der dabei erhaltende Wert digitalisiert.

Das Ausgangssignal des Wandlers 22 wird einmal in einem Digital-Analogwandler 24a in ein Analogsignal rückgewandelt, aber gleichzeitig über eine Schalteinrichtung 25 einem der Digitalspeicher 26a oder b mit 1024/4 = 256 Speicherplätzen zugeführt. Die Speicher 26a und b kann man sich als digitale Schieberegister vorstellen. Die Schalteinrichtung 25 bewirkt, daß während eines Abtastzyklus des Dioden-arrays die 256 Digitalsignale, z. B. in das Schieberegister 26a einlaufen, das dabei gleichzeitig seinen bisherigen Inhalt einem Digital-Analogwandler 24b zuführt. Im folgenden Diodenabtastzyklus werden dann durch die Schalteinrichtung 25 die Ausgangssignale des Wandlers 22 dem Schieberegister 26b zugeführt und dessen bisheriger Inhalt an den Digital-Analogwandleer 24b weitergegeben. Hiermit wird erreicht, daß jeweils an den Ausgängen der Wandler 24a und 24b Analogsignale B und B' anstehen, die von gleichen Dioden abgeleitet sind, jedoch an zwei um den doppelten Abtastzyklus (2T) versetzten Zeitpunkten dort gewonnen wurden. Die Wahl von 2T wurde vorgenommen, um sicherzustellen, daß ein in einem Abtastzyklus gewonnenes auszuwertendes Signal mit einem (vorherigen) Signalzustand verglichen wird, bei dem kein auszuwertendes Signal aufgetreten war. Wirkt z. B. eine Abschattung in einem Zyklus nur noch kurz (z. B. 30 % davon) ein, so reicht das Signal möglicherweise nicht aus, eine vorgegebene Schwelle zu überschreiten. Im nächsten Abtastzyklus sei die Verweilzeit dann ausreichend. Würde man auf das vorhergehende Signal beziehen (vergleichen), so könnte auch dann die Schwelle nicht überschritten werden. Durch Bezugnahme auf das Signal um 2T vorher wird jedoch die Schwelle überschritten. Nach der Erkennung des Ereignisses wird die Auswertung für eine Zeit gesperrt.

Im Baustein 27 wird nun jeweils der Quotient der Ausgangssignale B und B' gebildet ; dann wird dieser Quotient mit der Schwelle verglichen, die über eine Einrichtung 28 einstellbar sein kann und in Abhängigkeit davon, ob die Schwelle überschritten wurde oder nicht, wird dann ein 1- oder 0-Signal erzeugt, das an der Klemme 29 zur Verfügung steht. An der Klemme 29 erhält man während eines Abtastzyklus T eine Folge von 256 Signalen, von denen jedes die Form eines 1- oder 0-Signals aufweist.

Es sei hier noch erwähnt, daß die Detektoren eine gewisse Nachspeicherung aufweisen müssen, um sicherzustellen, daß eine Änderung erkannt werden kann. Diese Nachspeicherung muß so bemessen sein, daß eine Änderung auch dann noch erkannt werden kann, wenn die Abtastung einer Diode um nahezu T gegenüber dem Auftreten des Ereignisses versetzt erfolgt.

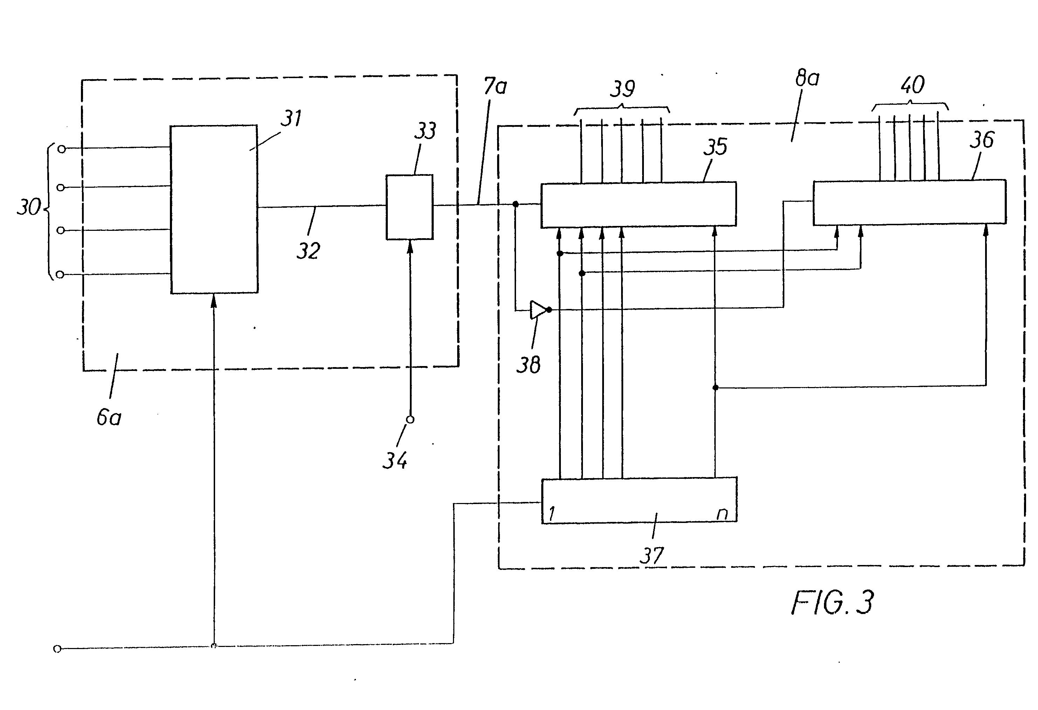

Die Ausgangsklemme 29 der Auswerteschaltung $5a_1$ und entsprechend auch die Ausgangsklemmen der anderen Teilauswerteschaltungen sind mit einem Block 6a verbunden (Fig. 1), in dem aus den vier parallel auftretenden Signalen der Schaltungen $5a_1$ bis $5a_4$ nacheinander auftretende Signale erzeugt werden. Dies wird anhand Fig. 3 erläutert, in der die vier Eingangsklemmen des Blocks 6a mit 30 bezeichnet sind. Die Signale werden in den Speicher 31 getrennt eingespeichert und im Zeitabstand von einem Viertel der Taktzeit $\Delta T$ (z. B. $\Delta T = 1/4 \cdot 1/4$ MHz) abgerufen. Damit entsteht auf der Ausgangsleitung 32 eine Signalfolge mit der Taktfrequenz 16 MHz, wobei die aufeinanderfolgenden Signale — und zwar in der Reihenfolge richtig — von den Ausgangssignalen der nebeneinanderliegenden Dioden abgeleitet sind.

Im Block 6a kann noch ein Tor 33 vorhanden sein, über das durch Ansteuerung an der Klemme 34 das Signal auf Leitung 32 unterdrückt wird, z. B., wenn im Block 6b in der zeitgleichen Signalfolge keine Signaländerung vorkommt, d. h. von der zweiten Kamera kein entsprechendes Ereignis registriert wurde.

Der Ausgang des Blocks 6a ist über eine Leitung 7a mit einem weiteren Block 8a verbunden, in dem eine Zuordnung der Signaländerungen zu den Dioden der Zeile erfolgt. Gemäß Fig. 3 enthält dieser Block 8a zwei Speichereinrichtungen 35 und 36 sowie einen Zähler 37, der (mit 16 MHz Taktfrequenz) jeweils von 1 bis n (1024) zählt und mit Beginn der Abtastung der 1. Diode des Arrays mit der Zählstellung 1 beginnt. Tritt am Ausgang des Tors 33 bzw. auf Leitung 7a zum ersten Mal in einem Zyklus T, z. B. eine « 1 » auf — es sei unterstellt, daß z. B. eine Abschattung solche den abgeschatteten Dioden zugeordnete Signale erzeugt — so wird im Speicher 35 die dann gerade vorhandene Zählstellung $Z_{min}$ des Zählers 37 festgehalten (z. B. $Z_{min} = 510$). Endet dieses 1-Signal nach einigen Takten, z. B. bei der Zählstellung 520, so wird wegen der Inversion im Inverter 38 im Speicher diese zweite Zählstellung $Z_{max}$ festgehalten. Dieses Ergebnis gibt an, daß eine Abschattung von der 510 bis zur 520. Diode festgestellt wurde. Diese Zählstellungen $Z_{min}$ und $Z_{max}$ stehen als Digitalwerte an den Klemmen 39 und 40 zur Verfügung.

Sie werden — wie in Fig. 1 gezeigt — über Leitungsbündel 9a und entsprechend für die andere Kamera über Leitungsbündel 9b einem Rechner 10 zugeführt, der aus dem bekannten Abstand der Kameras und deren bekannten Neigungswinkeln sowie aus diesen Meßwerten $Z_{min}$ und $Z_{max}$ und den entsprechenden Werten des anderen Kanals (Leitungsbündel 9b) den Durchstoßpunkt in der Meßebene nach den bekannten Beziehungen ermitteln kann.

**Patentansprüche**

1. Anordnung zur Bestimmung der Lage des Durchstoßpunktes eines entlang einer Bahn bewegten Objekts durch eine diese Bahn kreuzende Meßebene, mit
einer ersten Detektoreinrichtung, welche eine erste Photodetektorzeile (1a) enthält,
einer zweiten Detektoreinrichtung, welche eine zweite Photodetektorzeile (1b) enthält, deren zentrale optische Achse ebenso wie die Achse der ersten Photodetektorzeile unter einem Winkel zu dieser in der Meßebene verläuft,
einer Abtasteinrichtung (2a, 2b) zur parallelen und zyklisch wiederholten Abtastung der Detektoren der beiden Photodetektorzeilen (1a, 1b),
einer an die beiden Photodetektorzeilen (1a, 1b) angeschlossenen Rechenschaltung (10) zur Ermittlung der Koordinaten des Durchstoßpunkts anhand der bei der Abtastung der beiden Photodetektorzeilen erhaltenen elektrischen Signale nach Digitalisierung dieser Signal,
dadurch gekennzeichnet, daß
die Verbindung jeder Photodetektorzeile (1a, 1b) mit der Rechenschaltung (10) jeweils eine Anzahl von parallelen Empfangskanälen (4a, 5a, 4b, 5b) enthält, über die jeweils eine dieser Anzahl entsprechende Teilgruppe der Detektoren jeder Photodetektorenzeile gleichzeitig und im Wechsel mit den übrigen Teilgruppen abetastet wird, wobei jeder Empfangskanal jeweils folgende Einrichtungen aufweist :
(i) einen mit den Abtasteinrichtungen (2a, 2b) synchronisierten A/D-Wandler (22),
(ii) einen direkt an den Ausgang des A/D-Wandlers angeschlossenen ersten D/A-Wandler (24a),
(iii) einen zweiten D/A-Wandler (24b), dem das Ausgangssignal des A/D-Wandlers (22) wechselweise über eine erste oder eine zweite Verzögerungsschaltung (26a, 26b) zugeführt ist, deren Verzögerungszeit jeweils der Dauer des Abtastzyklus der Photodetektorzeilen entspricht,
(iv) einen Schalter (25) zur Umschaltung des Ausgangssignals des A/D-Wandlers (22) vom Eingang der einen Verzögerungsschaltung auf den Eingang der anderen Verzögerungsschaltung jeweils zu Beginn eines neuen Abtastzyklus der Photodetektorzeilen,
(v) eine Vergleicherschaltung (27) zum Vergleich der Ausgangssignale der beiden D/A-Wandler (24a, 24b) und zur Erzeugung eines Ausgangssignals, das bei Gleichheit bzw. Ungleichheit der verglichenen Signale einen ersten bzw. einen zweiten Wert annimmt.

2. Anordnung nach Anspruch 1, dadurch gekennzeichnet, daß das Eingangssignal jedes Empfangskanals (4a, 5a, 4b, 5b) auch einem Spitzenwertdetektor (23) zugeführt ist, dessen Ausgangssignal an den A/D-Wandler (22) des betreffenden Kanals als Bezugsgröße gelegt ist.

3. Anordnung nach Anspruch 1 oder 2, dadurch gekennzeichnet, daß in der Verbindung jeder Photodetektorzeile (1a, 1b) mit der Rechenschaltung (10) jeweils eine Speicherschaltung (31) zur Aufnahme der Ausgangssignale der Vergleicherschaltungen (27) der betreffenden Zeile (1a, 1b) vorgesehen ist, aus der die gespeicherten Signale in einer der Reihenfolge der Detektoren in jeder Photodetektorzeile entsprechenden Reihenfolge ausgelesen werden, sowie eine von den ausgelesenen Signalen beaufschlagte Detektorschaltung (8a, 8b) zur Ermittlung der innerhalb einer jeden Photodetektorzeile während eines Abtastzyklus abgeschatteten Detektoren.

4. Anordnung nach Anspruch 3, dadurch gekennzeichnet, daß die Detektorschaltung (8a, 8b) einen Zähler (37) mit einer der Anzahl der Detektoren der Photodetektorzeilen (1a, 1b) entsprechenden Zählkapazität, der mit der Lesefrequenz der Speicherschaltungen (31) beginnend mit jedem Abtastzyklus der Photodetektorzeilen neu hochgezählt wird, weiter ein erstes Register (35) zur Übernahme des Zählerstandes jeweils zu Beginn einer durch die Signale der Speicherschaltung der betreffenden Detektorschaltung angezeigten Abschattung der Detektoren der zugeordneten Photodetektorzeile innerhalb eines Abtastzyklus sowie ein zweites Register (36) zur Übernahme des Zählerstandes jeweils zum Ende der durch die Signale der betreffenden Speicherschaltung signalisierten Abschattung aufweist.

## Claims

1. Apparatus for determining the position of the point of intersection of an object moving along a path and a measuring plane crossing said path, comprising :
a first detector means comprising a first photodetector array (1a),
a second detector means comprising a second photodetector array (1b), whose central optical axis, like the axis of the first photodetector array, extends at an angle thereto in the measuring plane,
a scanning means (2a, 2b) for the parallel and cyclically repeated scanning of the detectors of the two photodetector arrays (1a, 1b),
a computer circuit (10) connected to the two photodetector arrays (1a, 1b) for determining the co-ordinates of the point of intersection by reference to and after digitalization of the electrical signals obtained from the scanning of the two photodetector arrays,
characterised in that :
the connection between each photodetector array (1a, 1b) and the computer circuit (10) in each case comprises a number of parallel receiver channels (4a, 5a, 4b, 5b), *via* each of which a subgroup of the detectors of each photodetector array corresponding to the said number is scanned simultaneously and in alternation with the other sub-groups, each receiver channel comprising the following means respectively :
(i) an A/D converter (22) synchronized with the scanning means (2a, 2b),
(ii) a first D/A converter (24a) connected directly to the output of the A/D converter,
(iii) a second D/A converter (24b), to which the output signal of the A/D converter (22) is fed alternately *via* a first or a second delay circuit (26a, 26b), the delay time of which in each case corresponds to the duration of the photodetector array scanning cycle,
(iv) a switch (25) for switching the output signal of the A/D converter (22) from the input of one delay circuit to the input of the other delay circuit at the beginning of each new photodetector array scanning cycle,
(v) a comparator circuit (27) for comparison of the output signals of the two D/A converters (24a, 24b) and for generating an output signal which assumes a first value if the compared signals are equal and a second value if the said signals are unequal.
2. Apparatus according to claim 1, characterised in that the input signal of each receiver channel (4a, 5a, 4b, 5b) is fed to a peak value detector (23) whose output signal is applied to the A/D converter (22) of the associated channel as a reference value.

3. Apparatus according to claim 1 or 2, characterised in that each connection between a photodetector array (1a, 1b) and the computer circuit (10) contains a memory circuit (31) to receive the output signals of the comparator circuits (27) of the associated array (1a, 1b), from which memory the stored signals are read out in a sequence corresponding to the sequence of the detectors in each array, and a detector circuit (8a, 8b), to which are fed the read-out signals, in order to determine the detectors shaded within each photodetector array during a scanning cycle.

4. Apparatus according to claim 3, characterised in that the detector circuit (8a, 8b) comprises a counter (37) having a counting capacity which corresponds to the number of detectors in the photodetector arrays (1a, 1b), said counter counting up afresh at the reading frequency of the memory circuits (31) starting with each photodetector array scanning cycle, and a first register (35) to take over the counter level at the beginning of each shading of the detectors of the associated array indicated by the signals of the memory circuit of the associated detector circuit, within a scanning cycle, and a second register (36) to take over the counter level at the end of each shading signalled by the signals of the associated memory circuit.

## Revendications

1. Dispositif pour la détermination de la position du point d'impact d'un objet qui se déplace le long d'une trajectoire, dans un plan de référence que cette trajectoire recoupe, comprenant
un premier dispositif de détection qui contient une première rangée de cellules photoélectriques (1a),
un second dispositif de détection qui contient une seconde rangée de cellules photoélectriques (1b) dont l'axe optique central fait avec l'axe de la première rangée de cellules photoélectriques un certain angle dans le plan de référence,
un dispositif d'exploration (2a, 2b) qui sert à explorer de manière cycliquement répétitive et en parallèle les cellules photoélectriques des deux rangées de cellules photoélectriques (1a, 1b), une calculatrice (10) reliée aux deux rangées de cellules photoélectriques (1a, 1b), et qui sert à déterminer les coordonnées du point d'impact, à l'aide des signaux électriques obtenus par l'exploration des deux rangées de cellules photoélectriques. Après avoir transformé ces signaux en signaux numériques,
caractérisé en ce que
la liaison de chacune des rangées de cellules photoélectriques (1a, 1b) avec la calculatrice (10) est constituée par un nombre de canaux de réception parallèles (4a, 5a, 4b, 5b) par chacun desquels un certain groupe partiel de cellules de chacune des rangées de cellules photoélectriques, le nombre de groupes correspondant à ce nombre de canaux, est exploré simultanément mais par contre alternativement avec les autres groupes similaires, et chacun des canaux de réception est composé des dispositifs suivants :

(i) un convertisseur analogique/numérique (22) synchronisé le dispositif d'exploration (2a, 2b),

(ii) un premier convertisseur numérique/analogique (24a) branché directement à la sortie du convertisseur analogique/numérique (22),

(iii) un second convertisseur numérique/analogique (24b) auquel le signal de sortie du convertisseur analogique/numérique (22) est amené alternativement à travers un premier ou un second circuit de retardement (26a, 26b), dont la durée de retardement correspond à la durée du cycle d'exploration des rangées de cellules photoélectriques,

(iv) commutateur (25) servant à brancher alternativement le signal de sortie du convertisseur analogique/numérique (22) soit à l'entrée de l'un des circuits de retardement soit à l'entrée de l'autre des circuits de retardement, au commencement d'un nouveau cycle d'exploration des rangées de cellules photoélectriques,

(v) un circuit de comparaison (27) pour comparer les signaux de sortie des deux convertisseurs numérique/analogique (24a, 24b) et pour émettre un signal de sortie qui prend une première ou seconde valeur suivant que les signaux comparés sont égaux ou sont inégaux.

2. Dispositif suivant la revendication 1 caractérisé en ce que le signal d'entrée de chacun des canaux de réception (4a, 5a, 4b, 5b) est amené à un détecteur de valeur maximale (23), dont le signal de sortie est amené au convertisseur analogique/numérique (22) du canal respectif pour servir de grandeur de référence.

3. Dispositif suivant l'une quelconque des revendications 1 ou 2 caractérisé en ce que dans la connexion de chaque rangée de cellules photoélectriques (1a, 1b) avec la calculatrice (10) est comprise une mémoire (31) servant à retenir les signaux de sortie des circuits de comparaison (27) des rangées respectives (1a, 1b) et à partir de laquelle les signaux mémorisés sont lus dans une suite qui correspond à la suite des cellules de chacune des rangées de cellules photoélectriques, ainsi qu'un circuit détecteur (8a, 8b) recevant les signaux ainsi lus, pour déterminer quelles sont celles des cellules photoélectriques de l'une des rangées de cellules photoélectriques qui ont été occultées pendant un certain cycle d'exploration.

4. Dispositif suivant la revendication 3 caractérisé en ce que le circuit détecteur (8a, 8b) comprend un compteur (37) pourvu d'une capacité de comptage qui correspond au nombre de cellules des rangées de cellules photoélectriques (1a, 1b), qui effectue de nouveau une totalisation à chaque début de cycle d'exploration, à la vitesse de lecture des mémoires (31), ensuite un premier registre (35) pour recevoir l'état du compteur au début de l'occultation des cellules de la rangée de cellules photoélectriques respective, lequel est indiqué par les signaux du circuit de la mémoire du circuit détecteur respectif, au cours d'un cycle d'exploration, et également un second registre (36) qui est destiné à recevoir l'état du compteur à la fin de l'occultation signalée par les signaux du registre de stockage correspondant.

FIG.1

FIG.2

0 072 511

FIG.3

0 072 511